**Europäisches Patentamt**

**European Patent Office**

**Office européen des brevets**

(11) Publication number: **0 131 260**
**B1**

# EUROPEAN PATENT SPECIFICATION

(45) Date of publication of patent specification: **23.01.91**

(21) Application number: **84107843.9**

(22) Date of filing: **05.07.84**

(51) Int. Cl.⁵: **G 01 S 11/00, H 04 B 1/66**

(54) An arrangement to provide an accurate time-of-arrival indication for a received signal.

(30) Priority: **11.07.83 US 512280**

(43) Date of publication of application:
**16.01.85 Bulletin 85/03**

(45) Publication of the grant of the patent:
**23.01.91 Bulletin 91/04**

(84) Designated Contracting States:
**DE FR GB**

(56) References cited:
**US-A-3 887 918**
**US-A-4 007 331**

**PATENTS ABSTRACTS OF JAPAN, vol. 4, no. 146 (P-31) 628r, 15th October 1980, page 157 P 31; & JP - A - 55 96 470**

**ELECTRONICS INTERNATIONAL, vol. 54, no. 14, July 1981, pages 118-123, New York, US; J. ELDON: "Digital signal processing hits stride with 64-bit correlator IC"**

(73) Proprietor: **International Standard Electric Corporation**
**320 Park Avenue**
**New York New York 10022 (US)**

(72) Inventor: **Jezo, Maurice Leon**
**74 Devonshire Road**
**Cedar Grove, N.J. (US)**
Inventor: **Lu, Ning Hsing**
**8 Ambler Way**
**Parsippany, N.J. (US)**

(74) Representative: **Klunker . Schmitt-Nilson . Hirsch**
**Winzererstrasse 106**
**D-8000 München 40 (DE)**

(56) References cited:
**M.I. SKOLNIK "Radar Handbook", Chapter 20 "Pulse compression radar", 1980, Mc Graw-Hill**

Courier Press, Leamington Spa, England.

## Description

The present invention relates to an arrangement to provide an accurate time-of-arrival indication for a received signal in communication, navigation and identification systems and the like, according to the generic part of claim 1.

Modern communication, navigation and identification systems often require accurate time-of-arrival (TOA) measurements of a received signal. One possible receiver construction is based on the use of a matched filter whose impulse response is the time-reversed signal waveform with an appropriate delay. The matched filter acts as a signal correlator and serves to detect the received signal and to estimate the instant in time when the received signal appears to be best aligned with the stored finite-duration matched waveform.

Possible approaches of the implementation of the correlator may be by utilizing a continuous-time device, such as surface-acoustic wave (SAW) devices or a discrete-time device, such as a charged-couple-device and digital correlator. The discete-time implementation of the signal correlator is very attractive in certain application areas where module size, cost and construction flexibility and expandability are of concern.

An example of a digital correlator is disclosed in ELECTRONICS INTERNATIONAL, Vol. 54, No. 14, July 1981, pages 118—123. Fig. 2 (a) of this publication shows a correlator comprising an input shift register receiving the incoming signal and a reference shift register storing a reference signal to which the incoming signal is to be correlated. The contents of both shift registers is compared by means of EXCLUSIVE-OR gates the number of which is equal to the number of stages of each of the shift registers. The outputs of the EXCLUSIVE-OR gates are connected to the inputs of a summing circuit the output of which presents the correlator output.

US—A—3,887,918 discloses a similar digital correlator which is used as a coincidence detector for use in a radar system. The pulse code of a pulse coder used for modulating the transmitted radio frequency energy is stored in a transmitted code storage means and the received energy, after phase detection and hard limitation, is supplied to a shift register. Corresponding stages of the shift register and the transmitted code storage means are connected to associated coincidence detectors. The outputs of the coincidence detectors are connected to a second level concidence detector.

The associated sampling losses for a discrete-time system can be classified into two areas:

(1) Sampling Signal Loss — The received signal may not be sampled at the time instant that the signal-to-noise ratio (instantaneous) is locally maximum due to the timing uncertainty.

(2) TOA Measurement Error — The accuracy of the TOA measurement is limited by the sampling rate (1/T) directly, i.e., the maximum TOA measurement error of $\pm T/2$ may occur under a single pulse observation, where T is the sampling clock time spacing.

These two associated losses may be reduced by increasing the sampling rate for better timing resolutions at the cost of circuitry complexity.

In systems using digital correlators for the TOA measurement or indication, the accuracy of the indication is a direct function of the clocking rate, the higher the rate the higher the accuracy. The accuracy is limited by the clock rate of the correlator.

The maximum clock rate of shift registers and gates used for digital correlators is limited. Consequently, the accuracy of the correlator cannot be increased beyond a limit corresponding to the maximum clock rate of the shift registers and the gates.

A problem underlying the present invention is to improve the accuracy of the time-of-arrival indication of an arrangement according to the generic part of claim 1.

A solution of this problem is given in claim 1. Preferred emnbodiments of the invention are set forth in the dependent claims.

The provision of N correlation means each of which is clocked by a different one of N-phase clocks occurring at a predetermined different time uniformly spaced over a given time interval, the timing resolution and the accuracy of the indication for a received signal are improved by a factor depending on the integer N.

US—A—4 007 331 discloses a digital system for demodulating relative phase-shift modulated binary data the bit phases of which can be changed by a positive or negative Doppler shift. For the purpose of data demodulation, the sample bits of the received signal are supplied to three channels, a center channel for no Doppler shift compensation, and two channels for positive and negative Doppler shift compensation. Each channel comprises a delay circuit. The delay of the delay circuit in one channel corresponds to no Doppler shift compensation. The delay of the delay circuit in the other two channels correspond to the positive and negative, respectively, Doppler shift compensation. The delayed signals are supplied to shift registers. Each stage of each shift register is connected to a comparator for comparing the data input into the shift register with a stored code word. All of these shift registers are clocked by the same clock pulses.

The use of a number of delaying units to each of which is supplied a received signal and each of which is clocked by a different one of different-phase clocks is known from Patents Abstracts of Japan, Vol. 4, No. 146 (P-31)/620/, 15, Oct. 1980, page 157 P31 and JP—A—559 6470. However, in case of this publication, the delaying units are comprised of a pulse compression device used for radar systems. The delaying units are analog delaying units having a number of stages. The contents in the respective stages of each delaying

EP 0 131 260 B1

unit are weighted by time inversion codes of transmitted codes. The weighted contents are added to one another by an adder to obtain a compressed wave.

Above-mentioned and other features and objects of this invention will become more apparent by reference to the following description of a preferred embodiment taken in conjunction with the accompanying drawing, in which:

Fig. 1 is a block diagram of an arrangement to provide an accurate time-of-arrival indication for a received signal in accordance with the principles of the present invention;

Fig. 2 illustrates an example of the multiple phase clocks employed in the arrangement of Fig. 1 when N is equal to 4; and

Fig. 3 is a series of waveforms illustrating the operation of the arrangement of Fig. 1.

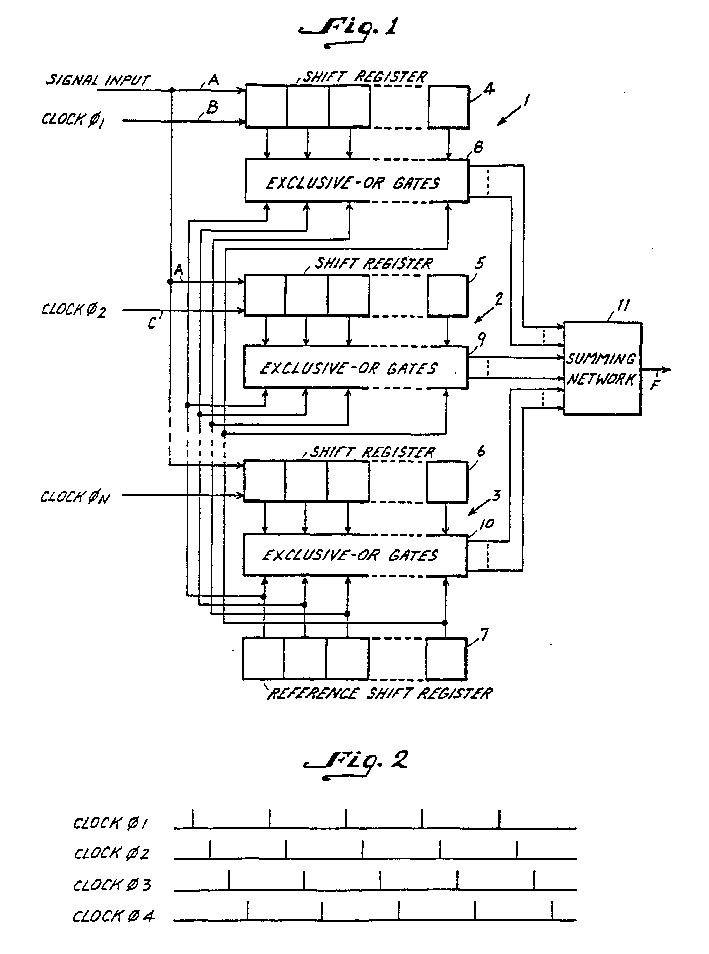

Referring to Fig. 1, the arrangement in accordance with the principles of the present invention to provide an accurate time-of-arrival indication for a received signal includes a plurality of correlation means 1—3, each including signal shift registers 4—6, a common reference signal shift register and EXCLUSIVE-OR gates 8—10. Gates 8—10 operate to compare the signal present in each stage of the associated signal registers 4—6 and the associated reference signal in the associated stage of the common reference signals register 7. The output of each of the EXCLUSIVE-OR gates is in accordance with the truth table for an EXCLUSIVE-OR gate as follows:

| Signal | Reference | Output of EXCLUSIVE-OR Gate |
|--------|-----------|-----------------------------|
| 0 | 0 | 0 |
| 0 | 1 | 1 |
| 1 | 0 | 1 |
| 1 | 1 | 0 |

If by chance it is desired that a logic "1" be provided when the signal and reference bits are the same and to provide a logic "0" output when the signal and reference bits are different, the EXCLUSIVE-OR gate can be followed by an inverter or NOT gate. The actual circuitry used in the comparison means provided by the EXCLUSIVE-OR gates 8—10 will depend upon the logic circuitry employed in the summing network 11.

As a result of the operation of the EXCLUSIVE-OR gates of each of the correlator means 1—3, the output of the correlator means may change state with every clock signal.

The received signal is clocked into each of the shift registers 4—6 by an associated one of a multiphase clock where all of the clock signals have the same frequency but a different phase; in other words, separated in time as shown in Fig. 2 for a four phase clocking system.

All of the bits in each stage of the signal shift registers 4—6 are compared to the corresponding bits in the corresponding stages of the reference signal shift register 7 and the result is input to summing network 11. As a result, the output of the summing network may change states N times during one clock period.

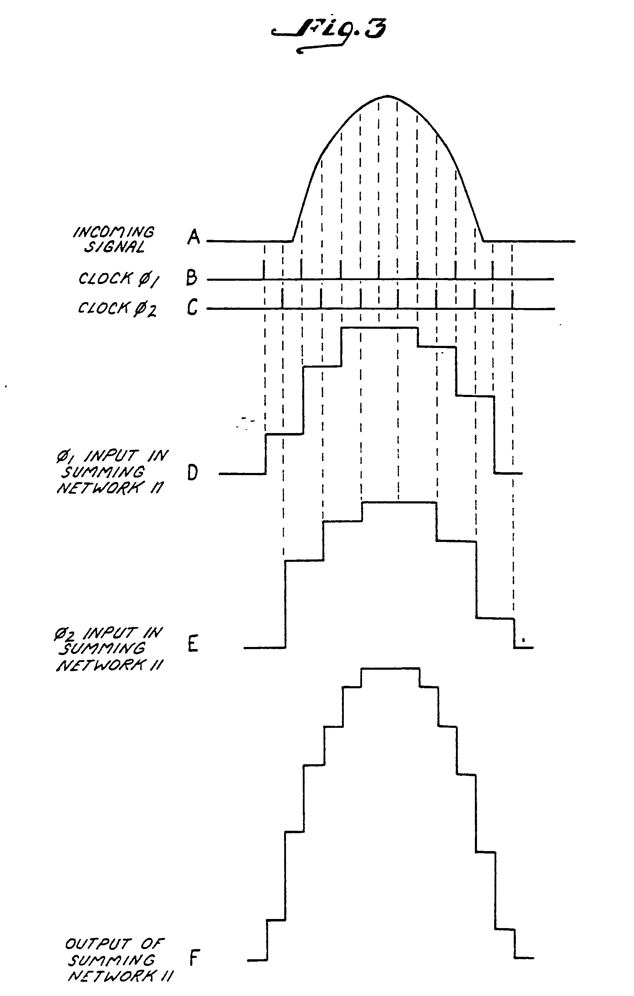

Curve A of Fig. 3 illustrates the signal input or received signal clocked into each of the shift registers 4 and 5 by the multiphase clock illustrated in curves B and C of Fig. 3. Curves D and E of Fig. 3 illustrate the input to summing network 11 for each of the two phased clocks of curves B and C. Curve F of Fig. 3 illustrates the output of summing network 11 of Fig. 1.

It can be seen from the illustration of Fig. 3 that the output waveform of summing network 11 of Fig. 1 provides a resolution equal to that of a single correlator clocked at twice the frequency.

**Claims**

1. An arrangement to provide an accurate time-of-arrival indication for a received signal, comprising:
a digital correlation network (1—3, 7) for correlating a digitized presentation of the received signal (A) in a clocked manner against a digitized presentation of a reference signal, having correlation means which comprises a shift register (4—6) coupled to said received signal, a reference signal shift register (7), and a comparison means (8—10) coupled to each stage of the shift register (4—6) and each stage of said reference signal shift register (7) to compare the contents of associated stages of the shift register (4—6) and said reference signal shift register (7) and produce an output signal indicative of the result of the comparison, characterised in that
the correlation network comprises N correlation means (1—3, 7), where N is an integer greater than one, the digitized presentation of the received signal (A) being clocked into each of the N correlation means (1—3, 7) by a respective N-phase clock, the N-phase clocks operating at a predetermined different time uniformly spaced over a given time interval,
each correlation means (1—3, 7) comprises a respective shift register (4—6) and a respective

3

comparison means (8—10) coupled to this shift register (4—6) and the reference signal shift register (7), said received signal being shifted into each of said N shift registers (4—6) by the respective N-phase clock, and an integration means (12) is coupled to the output of each of the N correlation means (1—3, 7).

2. An arrangement according to claim 1, wherein each of said N comparison means (8—10) includes a plurality of EXCLUSIVE-OR gates each coupled to a different associated stage of said different one of said N shift registers (4—6) and said reference signal shift register (7) to produce said output signal indicative of the result of said comparison.

3. An arrangement according to claim 2, wherein said integration means includes a summing network (11) coupled to each of said plurality of EXCLUSIVE-OR gates to sum said output signals to provide said indication of said time-of-arrival of said received signal (A).

4. An arrangement according to claim 1, wherein said integration means includes a summing network (11) coupled to said N comparison means (8—10) to sum said output signals to provide said indication of said time-of-arrival of said received signal (A).

5. An arrangement according to claim 1, wherein said integration means includes a summing network (11) coupled to said N correlation means (1—3, 7) to sum output signals therefrom to provide said indication of said time-of-arrival of said received signal (A).

**Patentansprüche**

1. Anordnung zur Schaffung einer Anzeige der genauen Ankunftszeit eines empfangenen Signals, mit einem digitalen Korrelationsnetzwerk (1—3, 7) zum Korrelieren einer digitalisierten Darstellung des empfangenen Signals (A) in getakteter Weise mit einer digitalisierten Darstellung eines Bezugssignals, mit einer Korrelationseinrichtung, die ein mit dem empfangenen Signal gekoppeltes Schieberegister (4—6), ein Bezugssignal-Schieberegister (7) und eine Vergleichseinrichtung (8—10) aufweist, die mit jeder Stufe des Schieberegisters (4—6) und jeder Stufe des Bezugssignals-Schieberegisters (7) gekoppelt ist, um den Inhalt der zugehörigen Stufen des Schieberegisters (4—6) und des Bezugssignal-Schieberegisters (7) zu vergleichen und ein das Resultat des Vergleichs anzeigendes Ausgangssignal zu erzeugen, dadurch gekennzeichnet, daß das Korrelationsnetzwerk N Korrelationseinrichtungen (1—3, 7) aufweist, wobei N eine ganze Zahl größer als 1 ist, wobei die digitalisierte Darstellung des empfangenen Signals (A) durch einen jeweiligen N-Phasen-Takt in jede der N Korrelationseinrichtung (1—3, 7) taktmäßig eingegeben wird und wobei die N-Phasen-Takte gleichmäßig beabstandet über ein vorgegebenes Zeitintervall zu vorbestimmten unterschiedlichen Zeiten wirksam sind, daß jede Korrelationseinrichtung (1—3, 7) ein jeweiliges Schieberegister (4—6) und eine mit diesem Schieberegister (4—6) und dem Bezugssignal-Schieberegister (7) gekoppelte, jeweilige Vergleichseinrichtung (8—10) aufweist, wobei das empfangene Signal durch den jeweiligen N-Phasen-Takt in jedes der N Schieberegister (4—6) geschiftet wird, und daß eine Integrationseinrichtung (12) mit dem Ausgang einer jeden der N Korrelationseinrichtung (1—3, 7) gekoppelt ist.

2. Anordnung nach Anspruch 1, dadurch gekennzeichnet, daß jede der N Vergleichseinrichtungen (8—10) mehrere EXKLUSIV-ODER-Gatter beinhaltet, deren jedes mit einer anderen zugehörigen Stufe der verschiedenen N Schieberegister (4—6) und des Bezugssignal-Schieberegisters (7) gekoppelt ist, um das das Resultat des Vergleichs anzeigende Ausgangssignal zu erzeugen.

3. Anordnung nach Anspruch 2, dadurch gekennzeichnet, daß die Integrationseinrichtung ein mit jedem der mehreren EXKLUSIV-ODER-Gatter gekoppeltes Summiernetzwerk (11) zum Summieren der Ausgangssignale aufweist, um die Anzeige der Ankunftszeit des empfangenen Signals (A) zu schaffen.

4. Anordnung nach Anspruch 1, dadurch gekennzeichnet, daß die Integrationseinrichtung ein mit den N Vergleichseinrichtungen (8—10) gekoppeltes Summiernetzwerk (11) zum Summieren der Ausgangssignale aufweist, um die Anzeige der Ankunftszeit des empfangenen Signals (A) zu schaffen.

5. Anordnung nach Anspruch 1, dadurch gekennzeichnet, daß die Integrationseinrichtung ein mit den N Korrelationseinrichtungen (1—3, 7) gekoppeltes Summiernetzwerk (11) zum Summieren von Ausgangssignalen von diesen aufweist, um die Anzeige der Ankunftszeit des empfangenen Signals (A) zu schaffen.

**Revendications**

1. Dispositif pour fournir une indication exacte de temps d'arrivée pour un signal reçu, comprenant un réseau de corrélation numérique (1—3, 7) pour la corrélation d'une présentation numérique du signal reçu (A), de façon rythmée, contre une présentation numérique d'un signal de référence, ayant des moyens de corrélation comprenant un registre de décalage (4—6) couplé au dit signal reçu, un registre de décalage du signal de référence (7) et un moyen de comparaison (8—10) couplé à chaque étage du registre de décalage (4—6) et à chaque etage du dit registre de décalage du signal de référence (7) pour comparer les contenus des étages associés du registre de décalage (4—6) et du dit registre de décalage du signal de référence (7) et pour générer un signal de sortie indiquant le résultat de la comparaison, caractérisé en ce que le réseau de corrélation comprend N moyens de corrélation (1—3, 7), N étant un nombre entier supérieur à un, la présentation numérique du signal reçu (A) étant entrée, de façon rythmée, dans chacun des N moyens de corrélation (1—3, 7) par un rythmeur respectif à N phases, les rythmeurs à N phases fonctionnant à des moments différents prédéterminés et répartis régulièrement sur une période donnée,

que chaque moyen de corrélation (1—3, 7) comprend un registre de décalage respectif (4—6) et un moyen de comparaison respectif (8—10) couplé à ce registre de décalage (4—6) et au registre de décalage du signal de référence (7), le dit signal reçu étant décalé dans chacun des dits N registres de décalage (4—6) par le rythmeur respectif à N phases,

et qu'un moyen d'intégration (12) est couplé à la sortie de chacun des N moyens de corrélation (1—3, 7).

2. Dispositif selon la revendication 1, caractérisé en ce que chacun des dits N moyens de comparaison (8—10) comprend une pluralité de portes OU EXCLUSIF dont chacune est couplée à un différent étage associé dudit étage différent des dits N registres de décalage (4—6) et dudit registre de décalage de signal de référence (7) pour générer ledit signal de sortie indiquant le résultat de ladite comparaison.

3. Dispositif selon la revendication 1, caractérisé en ce que ledit moyen d'intégration comprend un réseau de totalisation (11) couplé à chacune de ladite pluralité de portes OU EXCLUSIF pour totaliser les dits signaux de sortie afin de générer ladite indication dudit temps d'arrivée dudit signal reçu (A).

4. Dispositif selon la revendication 1, caractérisé en ce que ledit moyen d'intégration comprend un réseau de totalisation (11) couplé aux dits N moyens de comparaison (8—10) pour totaliser les dits signaux de sortie afin de générer ladite indication dudit temps d'arrivée dudit signal reçu (A).

5. Dispositif selon la revendication 1, caractérisé en ce que ledit moyen d'intégration comprend un réseau de totalisation (11) couplé aux dits N moyens de corrélation (1—3, 7) pour totaliser les dits signaux de sortie afin d'en générer ladite indication dudit temps d'arrivée dudit signal reçu (A).

## *Fig. 1*

SIGNAL INPUT ──── A

CLOCK $\phi_1$ ──── B

SHIFT REGISTER 4

EXCLUSIVE-OR GATES 8

SHIFT REGISTER 5

CLOCK $\phi_2$ ──── C

EXCLUSIVE-OR GATES 9

SUMMING NETWORK 11 ──── F

SHIFT REGISTER 6

CLOCK $\phi_N$ ────

EXCLUSIVE-OR GATES 10

REFERENCE SHIFT REGISTER 7

1

2

3

A

## *Fig. 2*

CLOCK $\phi 1$

CLOCK $\phi 2$

CLOCK $\phi 3$

CLOCK $\phi 4$

1

## Fig.3

INCOMING SIGNAL    A

CLOCK $\phi_1$    B

CLOCK $\phi_2$    C

$\phi_1$ INPUT IN SUMMING NETWORK 11    D

$\phi_2$ INPUT IN SUMMING NETWORK 11    E

OUTPUT OF SUMMING NETWORK 11    F